# EUROPÄISCHE PATENTANMELDUNG

(11) **EP 3 007 194 A1**
(43) Veröffentlichungstag der Anmeldung: **13.04.2016**
(21) Anmeldenummer: 14401096.4
(22) Anmeldetag: 14.10.2014
(51) Int. Cl.: H01H 9/02, A47C 31/00, H01H 23/16, H01H 21/50, A61G 7/00

(54) **Hebelhandschalter**

(30) Priorität: 10.10.2014 DE 202014104817 U
(71) Anmelder: limoss GmbH & Co. KG, 58300 Wetter (DE)
(72) Erfinder: Kristen, Martin, 45883 Gelsenkirchen (DE)
(74) Vertreter: Köchling, Conrad-Joachim

(57) **Zusammenfassung**

Die Erfindung betrifft einen Hebelhandschalter (1) zur Steuerung der elektromotorischen Verstellung eines Sitz- oder Liegemöbels, wobei der Hebelhandschalter (1) ein Gehäuse (2) aufweist, in dem verschiedene Schalter mit Schaltkontakten zur Betätigung der elektrischen Antriebe des Sitz- oder Liegemöbels angeordnet sind, die mittels eines aus dem Gehäuse (2) herausragenden Handhebels (9) durch Bewegen des Handhebels (9) in Vorwärtsrichtung oder in Rückwärtsrichtung schaltbar sind und das Sitz-oder Liegemöbel verstellen, wobei der Hebelhandschalter (1) mittels eines stromführenden Kabels (10) mit den elektrischen Antrieben und / oder einer Stromquelle verbunden oder verbindbar ist, wobei in jeder Betätigungsrichtung des Handhebels (9) mindestens zwei aufeinander folgende Schalter (3, 4 beziehungsweise 5, 6) mit Schaltkontakt (7,8 beziehungsweise 12, 13) im Gehäuse (2) angeordnet sind, die jeweils einen elektrischen Antrieb steuern.

## Beschreibung

Die Erfindung betrifft einen Hebelhandschalter zur Steuerung der elektromotorischen Verstellung eines Sitz- oder Liegemöbels, insbesondere eines Relax-Sessels, beispielsweise aus einer Grundstellung in eine Komfortstellung und zurück in die Grundstellung, wobei der Hebelhandschalter ein Gehäuse aufweist, in dem verschiedene Schalter mit Schaltkontakten zur Betätigung der elektrischen Antriebe des Sitz- oder Liegemöbels angeordnet sind, die mittels eines aus dem Gehäuse herausragenden Handhebels durch Bewegen des Handhebels in Vorwärtsrichtung oder in Rückwärtsrichtung schaltbar sind und das Sitzoder Liegemöbel aus der Grundstellung in die Komfortstellung oder zurück in die Grundstellung verstellen, wobei der Hebelhandschalter mittels eines stromführenden Kabels mit den elektrischen Antrieben und/oder einer Stromquelle verbunden oder verbindbar ist.

Derartige Handhebelschalter sind im Stand der Technik vielfach bekannt und werden beispielsweise bei der Verwendung an einem Relax-Sessel häufig seitlich an den Sitz des Relax-Sessels geschraubt. Mittels derartiger Handhebelschalter kann ein Bediener immer nur einen Motor betätigen. So kann beispielsweise durch Drücken des Handhebels in Vorwärtsrichtung der Motor zur Verstellung des Relax-Sessels in die Komfortstellung betätigt werden und beim Ziehen desselben Handschalters in Rückwärtsrichtung eine rückwärtige Bewegung, beispielsweise aus der Komfortstellung zurück in die Grundstellung des Relax-Sessels, erfolgen. Mittels eines derartigen Handhebelschalters kann also lediglich immer nur ein Motor in zwei Richtungen betätigt werden.

Aufgrund des gestiegenen Komfortbedürfnisses vieler Verbraucher ist der Einsatz dieser Handschalter bei mehrmotorigen, insbesondere zwei-motorigen Systemen, nicht oder nur unter Anordnung eines zweiten Handhebelschalters möglich.

Aufgrund des Eingangs genannten Standes der Technik liegt der vorliegenden Erfindung die Aufgabe zugrunde, einen Handhebelschalter der eingangs genannten Art derart zu verbessern, dass mittels nur eines Handhebelschalters mehrere Motoren eines Sitz- oder Liegemöbels, insbesondere eines Relax-Sessels auf schnelle und einfache Art und Weise betätigt werden können.

Zur Lösung dieser Aufgabe schlägt die Erfindung vor, dass in jeder Betätigungsrichtung des Handhebels mindestens zwei aufeinander folgende Schalter mit Schaltkontakt im Gehäuse angeordnet sind, die jeweils einen elektrischen Antrieb steuern.

Durch eine derartige Anordnung mehrerer aufeinander folgender Schalter können durch Betätigung nur eines Handhebels in eine Richtung mindestens zwei aufeinander folgende Schalter geschaltet werden. Diese können entweder jeweils einen Motor steuern oder einen Motor in verschiedene Richtungen steuern. So kann beispielsweise beim Drücken des Handhebels in Vorwärtsrichtung sich der Fußmotor eines Relax-Sessels in die eine Richtung bewegen und beim weiteren Drücken des Handhebels in dieselbe Richtung der Fußmotor in die entgegengesetzte Richtung verfahren.

Zudem kann auch durch Ziehen des Handhebels in Rückwärtsrichtung des Sessels ein weiterer Motor wie beispielsweise der Rückenmotor des Relax-Sessels in die eine Richtung in Bewegung gesetzt werden und beim weiteren Ziehen in dieselbe Richtung der Rückenmotor des Relax-Sessels in die entgegengesetzte Richtung bewegt werden.

Hierdurch ist es mit nur einem Handhebel ermöglicht, mindestens vier elektromotorische Bewegungen eines entsprechenden Möbelteils zu steuern.

Insbesondere kann dabei besonders bevorzugt vorgesehen sein, dass das Gehäuse eine flache Quaderform aufweist, wobei der Handhebel etwa mittig über den Verlauf der Länge aus einer der flachen Längsseiten herausragt und mit einem innerhalb des Gehäuses drehbar angeordneten Schaltelement verbunden ist, welches sowohl bei einer Vorwärtsbewegung als auch bei einer Rückwärtsbewegung des Handhebels zuerst einen Schaltkontakt eines ersten Schalters im Gehäuse betätigt und bei einer weiteren Bewegung in dieselbe Richtung einen Schaltkontakt eines weiteren Schalters betätigt, wobei das Schaltelement über den Verlauf der Länge des Gehäuses etwa mittig zwischen zwei Schalterpaaren angeordnet ist, und das Schaltelement in Richtung der Schalter abragende Schaltnocken aufweist, die in der Nichtbetätigungslage nahe an den Schaltkontakten der Schalter angeordnet sind und die in einer ersten Betätigungslage einen Schaltkontakt eines ersten Schalters und in der weiteren Betätigungslage in derselben Richtung einen Schaltkontakt eines weiteren Schalters schalten.

Mittels einer derartigen Anordnung können ohne bedeutende Vergrößerung des Gehäuses mehrere Schalter mit mehreren Schaltkontakten innerhalb des Gehäuses angeordnet und in an sich bekannter Art und Weise beispielsweise am Relax-Sessel befestigt werden. Eine derartige Anordnung von Schaltern mit Schaltkontakten und einem die Schaltkontakte betätigenden Schaltelement ermöglicht die an sich bekannte flache Bauform des Gehäuses. Die bekannte Bedienung kann beibehalten werden und wird um zusätzliche Funktionen erweitert. Durch diese Anordnung können beispielsweise verschiedene motorische Antriebe beim Verstellen des Handhebels in eine Richtung aufeinander folgend betätigt werden oder es kann ein Motor in verschiedene Richtungen betätigt werden.

Darüber hinaus kann besonders bevorzugt vorgesehen sein, dass in der ersten Betätigungslage ein Schaltnocken des Schaltelements einen Schaltkontakt des der Betätigungsrichtung abgewandten Schalterpaares und in der weiteren Betätigungslage in derselben Richtung ein weiterer Schaltnocken des Schaltelements einen Schaltkontakt des der Betätigungsrichtung zugewandten Schalterpaares schaltet.

Bei einer derartigen Ausführungsform der Erfindung betätigt beispielsweise beim Verstellen des Handhebels in Vorwärtsrichtung der Handhebel zuerst einen Schaltkontakt eines Schalters auf der der Betätigungsrichtung abgewandten Seite innerhalb des Gehäuses und beim weiteren Verstellen des Handhebels in derselben Richtung betätigt ein weiterer Schaltnocken des Schaltelementes einen Schaltkontakt eines Schalters, der in der Betätigungsrichtung zugewandten Seite des Gehäuses angeordnet ist, also diagonal gegenüber dem zuerst betätigten Schaltkontakt innerhalb des Gehäuses angeordnet ist.

Zudem kann besonders bevorzugt vorgesehen sein, dass bei einer Verdrehung des Schaltelementes um 5° gegenüber der Nichtbetätigungslage in jede Richtung ein erster Schaltnocken einen ersten Schaltkontakt schaltet und bei einer Verdrehung um 11° gegenüber der Nichtbetätigungslage ein weiterer Schaltnocken einen weiteren Schaltkontakt schaltet.

Beim Betätigen des Handhebels erfolgt nach einer Verdrehung des Schaltelementes, welches mit dem Handhebel verbunden ist, um 5° gegenüber der Nichtbetätigungslage sowohl in Vorwärts- als auch in Rückwärtsrichtung eine Schaltung des jeweils ersten Schalters. Beim Weiterverdrehen des Schaltelementes durch Betätigen des Handhebels erfolgt ein weiterer Schaltkontakt bei einer Verdrehung des Schaltelementes um 11° gegenüber der Nichtbetätigungslage. Hierdurch ist es dem Benutzer auf einfache und intuitive Art und Weise ermöglicht, verschiedene motorische Unterstützungen zu steuern.

Um Fehlbedienungen zu vermeiden und eine besonders einfache Bedienung des Handhebelschalters zu ermöglichen, kann besonders bevorzugt vorgesehen sein, dass der Handhebel in der Nichtbetätigungslage gegen die Kraft einer Feder gehalten ist.

Dabei kann besonders bevorzugt vorgesehen sein, dass am Schaltelement an der dem Handhebel entgegen gesetzten Seite ein Vorsprung ausgebildet ist, der im Gehäuse zwischen zwei vorgespannten Federn angeordnet ist.

Durch eine derartige Anordnung ist es sichergestellt, dass der Handhebel bei Nichtbetätigung durch einen Benutzer jederzeit in die Nichtbetätigungslage zurückgestellt, beziehungsweise in dieser gegen die Kraft einer Feder gehalten ist. Somit ist eine ungewollte Betätigung der motorischen Antriebe wirksam verhindert, da lediglich bei Druckausüben durch den Benutzer in Vorwärts- oder in Rückwärtsrichtung auf den Handhebel die Schaltpunkte zur Steuerung der elektromotorischen Antriebe erreicht werden und diese steuern. Beim Loslassen des Handhebels erfolgt automatisch eine Zurückstellung des Handhebels und des damit verbundenen Schaltelementes in die Nichtbetätigungslage.

Auch kann besonders bevorzugt vorgesehen sein, der Kraftaufwand zur Betätigung des weiteren Schalters durch den Handhebel deutlich höher ist als der Kraftaufwand zur Betätigung des ersten Schalters.

Dabei kann besonders bevorzugt vorgesehen sein, dass am Schaltelement eine Laufbahn mit einer in der Laufbahn geführten ersten Kugel ausgebildet ist, wobei die Kugel zwischen Laufbahn einerseits und dem ersten Ende einer Schraubenfeder andererseits gehalten und in der Laufbahn zwangsgeführt ist, wobei zwischen dem anderen Ende der Schraubenfeder und einer Gehäusewand eine weitere Kugel angeordnet und geführt ist, wobei ferner die Laufbahn in dem Bereich zwischen den jeweils ersten Schaltpositionen jeder Betätigungsrichtung tiefer ausgebildet ist als in den Bereichen zwischen erster und weiterer Schaltposition und im Bereich jeder Schaltposition eine der Kugelform entsprechende Senke angeordnet ist.

Durch die Anordnung einer derartig in einer Laufbahn entlang des Schaltelementes geführten und gegen die Kraft einer Feder gehaltenen Kugel ist eine Rückmeldung für den Benutzer dahingehend gegeben, in welcher Schaltposition sich der Handhebel gerade befindet. So ist zum Erreichen der weiteren Schaltposition ein größerer Kraftaufwand bei der Betätigung des Handhebels erforderlich als zum Erreichen der ersten Schaltposition. Durch die innerhalb der Laufbahn angeordneten Senken ist eine Art Rastposition innerhalb der jeweiligen Schaltposition dadurch erreicht, dass die Kugel beim Erreichen der jeweiligen Schaltposition in die Senke einrollt und beim weiteren Betätigen zuerst aus dieser herausgedrückt werden muss.

Beim Einrollen in die Senke wird zudem ein Klick-Geräusch erzeugt, welches dem Besucher auch eine akustische Rückmeldung über das Erreichen der Schaltposition vermittelt.

Somit ist auf sichere und einfache Art und Weise ermöglicht, dem Benutzer die jeweiligen Schaltpunkte bei der Betätigung des Handhebels spürbar und akustisch wahrnehmbar zu machen.

Ein Ausführungsbeispiel der Erfindung ist in den Figuren dargestellt und im Folgenden näher beschrieben.

Es zeigen:
- Figur 1: ein Ausführungsbeispiel der Erfindung in Seitenansicht geschnitten in der Nichtbetätigungslage;
- Figur 2: desgleichen in einer ersten Betätigungslage um 5° verdreht;
- Figur 3: eine Ausschnittsvergrößerung aus Figur 2;
- Figur 4: das Ausführungsbeispiel in einer zweiten Betätigungslage um 11° verdreht;
- Figur 5: eine Ausschnittsvergrößerung aus Figur 4;
- Figur 6: das Ausführungsbeispiel in einer ersten Betätigungslage um 5° in die andere Richtung verdreht;
- Figur 7: eine Ausschnittsvergrößerung aus Figur 6;
- Figur 8: das Ausführungsbeispiel in einer um 11° verdrehten zweiten Betätigungslage in die andere Richtung verdreht;
- Figur 9: eine Ausschnittsvergrößerung aus Figur 8;

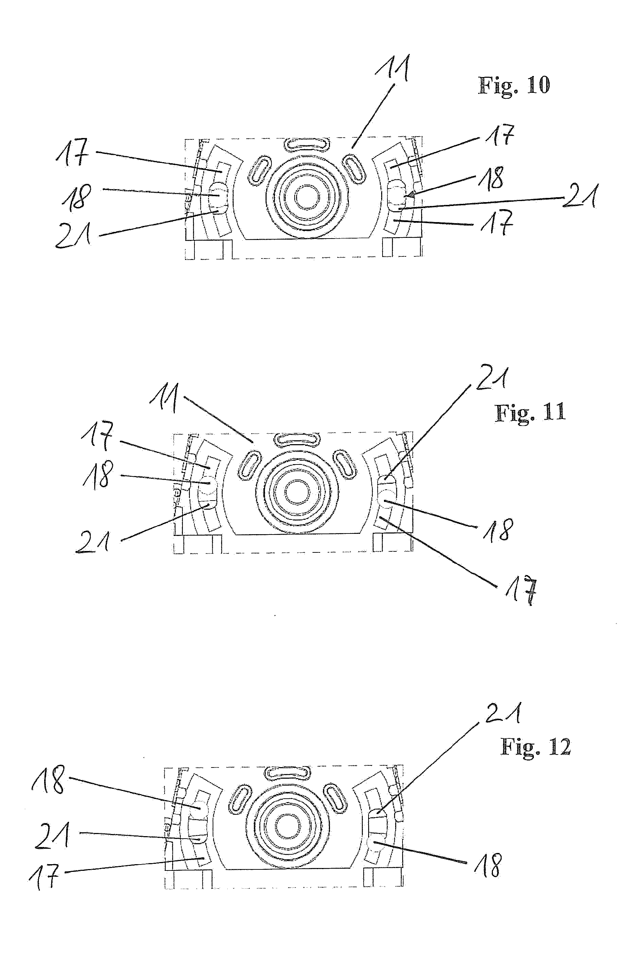

- Figur 10: eine Laufbahn mit Kugel in der Nichtbetätigungslage;
- Figur 11: desgleichen in einer ersten Betätigungslage;
- Figur 12: desgleichen in einer zweiten Betätigungslage;

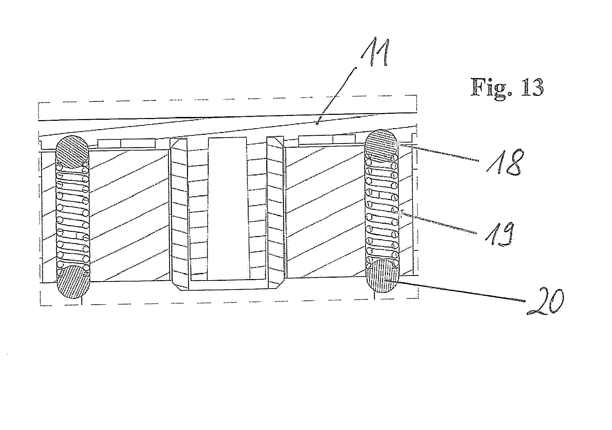

- Figur 13: einen Querschnitt des Schaltelementes.

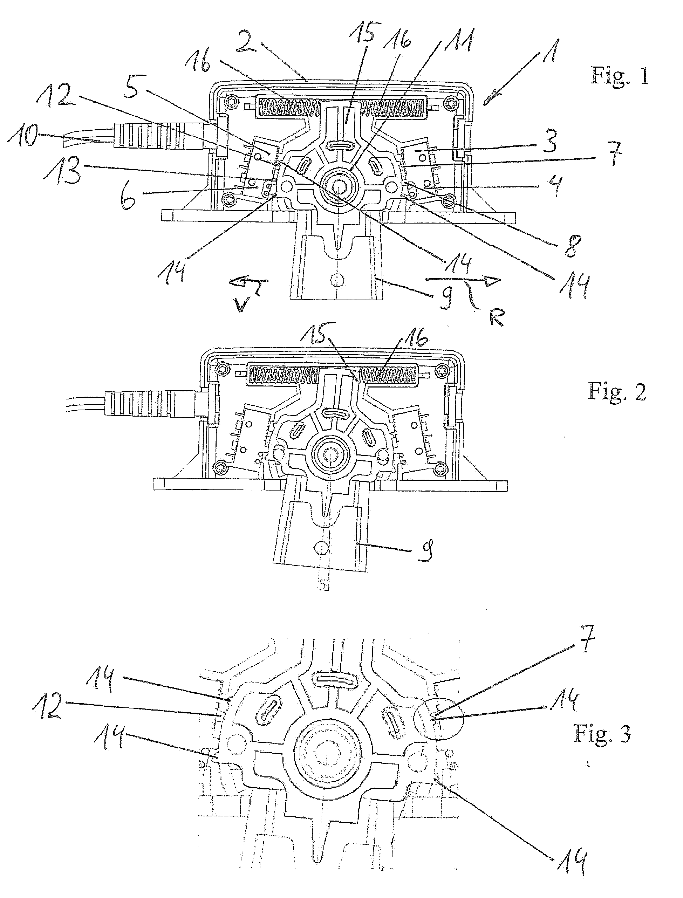

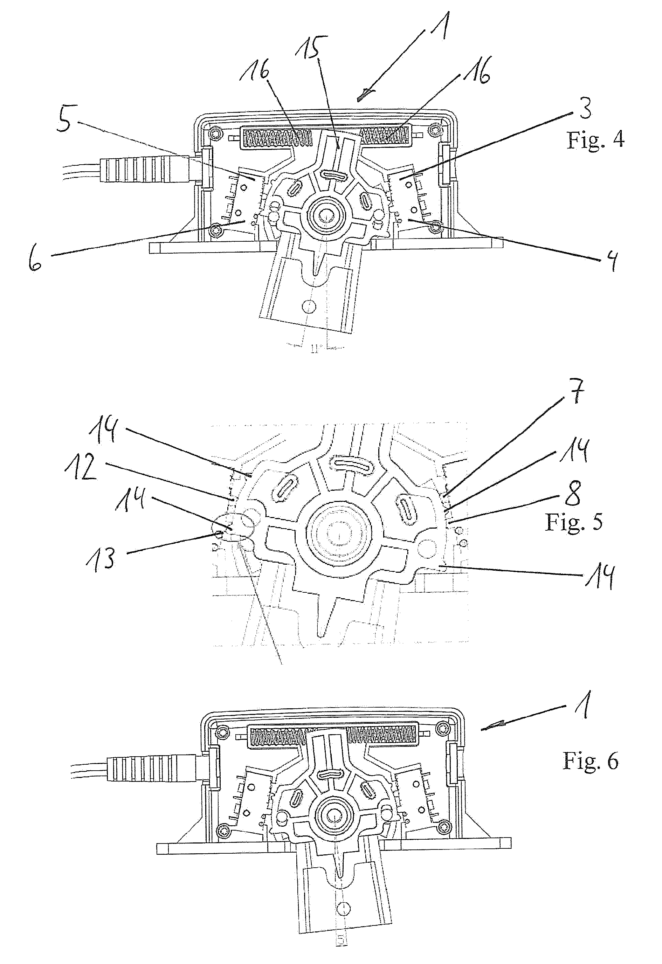

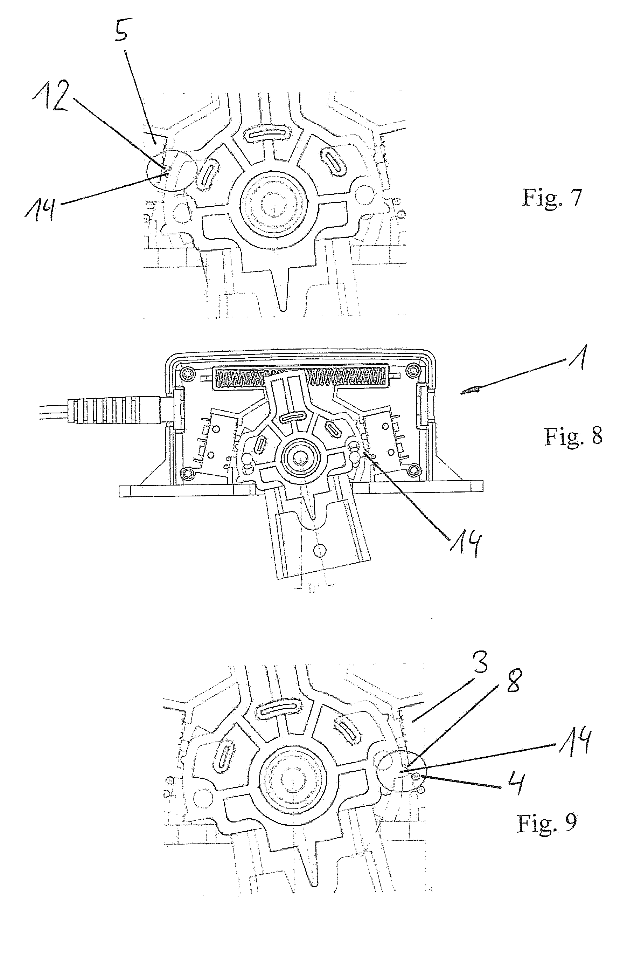

In den Figuren 1, 2, 4, 6 und 8 ist ein Handhebelschalter 1 in Seitenansicht geschnitten gezeigt. Der Handhebelschalter 1 dient zur Steuerung der elektromotorischen Verstellung eines Sitz- oder Liegemöbels, insbesondere eines Relax-Sessels. Die Verstellung kann beispielsweise aus einer Grundstellung in eine nach hinten verlagerte Komfortstellung und zurück in die Grundstellung erfolgen. Dazu weist der Handhebelschalter 1 ein Gehäuse 2 auf, in dem verschiedene Schalter mit Schaltkontakten zur Betätigung der elektrischen Antriebe des Sitzoder Liegemöbels angeordnet sind. Die Schalter sind mittels eines aus dem Gehäuse 2 herausragenden Handhebels 9 durch Bewegen des Handhebels 9 in Vorwärtsrichtung (V) oder in Rückwärtsrichtung (R) schaltbar. Beim Bewegen des Handhebels 9 in Vorwärtsrichtung oder in Rückwärtsrichtung werden die elektromotorischen Antriebe des Sitz- oder Liegemöbels, beziehungsweise des Relax-Sessels, geschaltet und verstellen es entsprechend. Mittels eines derartigen erfindungsgemäßen Handhebelschalters 1 ist die an sich bekannte Art und Weise der Steuerung, nämlich durch Bewegen eines Handhebels 9 in Vorwärtsrichtung oder in Rückwärtsrichtung beibehalten, und eine erhebliche Funktionserweiterung, nämlich das Schalten von verschiedenen Motoren nacheinander oder von verschiedenen Bewegungsrichtungen eines Motors nacheinander ermöglicht.

Das Gehäuse 2 weist dabei eine flache Quaderform auf, aus der der Handhebel 9 etwa mittig über den Verlauf der Länge aus einer der flachen Längsseiten herausragt. Der Handhebel 9 ist mit einem innerhalb des Gehäuses 2 drehbar angeordneten Schaltelement 11 verbunden. Das Schaltelement 11 betätigt sowohl bei einer Vorwärtsbewegung des Handhebels 9, als auch bei einer Rückwärtsbewegung des Handhebels 9, zuerst einen Schaltkontakt 7 oder 12 eines ersten Schalters 3 oder 5 im Gehäuse und bei einer weiteren Bewegung in dieselbe Richtung einen Schaltkontakt 8 oder 13 eines weiteren Schalters 4 oder 6. Dabei ist das Schaltelement 11 über den Verlauf der Länge des Gehäuses 2 etwa mittig zwischen zwei Schalterpaaren 3, 4 und 5, 6 angeordnet und weist in Richtung der Schalter 3, 4, 5, 6 abragende Schaltnocken 14 auf. Die Schaltnocken 14 sind in der Nichtbetätigungslage nahe an den Schaltkontakten 7, 8, 12, 13 der Schalter 3, 4, 5, 6 angeordnet. Die Schaltnocken 14 schalten in einer ersten Betätigungslage einen Schaltkontakt 7 oder 12 eines ersten Schalters 3 oder 5 und in der weiteren Betätigungslage in jeweils derselben Richtung einen Schaltkontakt 8 oder 13 eines weiteren Schalters 4 oder 6.

Somit ist das Nacheinanderschalten von verschiedenen Motoren oder aber von verschiedenen Bewegungsrichtungen ein und desselben Motors durch weiteres Bewegen des Handhebels 9 in dieselbe Richtung durch den Benutzer auf schnelle und einfache Art und Weise ermöglicht.

Im Ausführungsbeispiel schaltet in der ersten Betätigungslage ein Schaltnocken 14 des Schaltelements 11 einen Schaltkontakt 7 oder 12 des der Betätigungsrichtung abgewandten Schalterpaares 3, 4, beziehungsweise 5, 6. In der weiteren Betätigungslage in derselben Richtung schaltet ein weiterer Schaltnocken 14 des Schaltelementes 11 einen Schaltkontakt 8 oder 13 des der Betätigungsrichtung zugewandten Schalterpaares 3, 4, beziehungsweise 5, 6.

Somit wird beim Betätigen des Handhebels 9 in eine Richtung zuerst ein erster Schaltkontakt 7 oder 12 betätigt und beim weiteren Verstellen des Handhebels 9 in die weitere Schaltposition ein dem ersten Schaltkontakt 7 oder 12 diagonal etwa gegenüberliegender Schaltkontakt 8 oder 13 geschaltet.

Dabei hat es sich als besonders bedienerfreundlich herausgestellt, dass bei einer Verdrehung des Schaltelementes 11 um 5° gegenüber der Nichtbetätigungslage in jede Richtung ein erster Schaltnocken 14 einen ersten Schaltkontakt 7 oder 12 schaltet und bei einer Verdrehung um 11° gegenüber der Nichtbetätigungslage ein weiterer Schaltnocken 14 einen weiteren Schaltkontakt 8 oder 13 schaltet.

Um eine ungewünschte Betätigung der motorischen Antriebe zu vermeiden, ist am Schaltelement 11, an der dem Handhebel 9 entgegengesetzten Seite des Schaltelementes 11, ein Vorsprung 15 ausgebildet. Der Vorsprung 15 ist im Gehäuse 2 zwischen zwei vorgespannten Federn 16 angeordnet, sodass der Handhebel 9 und das damit verbundene Schaltelement 11 in der Nichtbetätigungslage gegen die Kraft der Federn 16 gehalten ist.

Hierdurch ist es sichergestellt, dass beispielsweise beim Loslassen des Handhebels 9 durch einen Benutzer dieser durch die Federkraft in die Nichtbetätigungslage zurückgestellt wird.

Um einem Benutzer die unterschiedlichen Schaltpunkte auf möglichst einfache Art und Weise spürbar zu machen, ist der Kraftaufwand zur Betätigung des weiteren Schalters 4, beziehungsweise 6, durch den Handhebel 9 deutlich höher als der Kraftaufwand zur Betätigung des jeweils ersten Schalters 3, beziehungsweise 5. Hierzu ist am Schaltelement 11 eine Laufbahn 17 mit einer in der Laufbahn 17 geführten ersten Kugel 18 ausgebildet. Die Kugel 18 ist zwischen der Laufbahn 17 einerseits und dem ersten Ende einer Schraubenfeder 19 andererseits gehalten und in der Laufbahn 17 zwangsgeführt. Dabei ist zwischen dem anderen Ende der Schraubenfeder 19 und einer Gehäusewand eine weitere Kugel 20 angeordnet und geführt. Zudem ist die Laufbahn 17 in dem Bereich zwischen den jeweiligen ersten Schaltpositionen jeder Betätigungsrichtung tiefer ausgebildet als in den Bereichen zwischen erster und weiterer Schaltposition. Beim Verstellen des Handhebels 9 in die erste Schaltposition, muss somit der Benutzer eine geringere Kraft aufwenden, da die Kugel 18 gegen eine geringere Federkraft innerhalb der Laufbahn 17 angeordnet ist, als im Bereich zwischen erster und weiterer Schaltposition. Dadurch, dass die Laufbahn 17 in dem Bereich zwischen den jeweils ersten Schaltpositionen und den weiteren Schaltpositionen tiefer ausgebildet ist, muss beim Verstellen die Kugel 18 gegen die Schraubenfeder 19 gedrückt werden, um entlang der Laufbahn 17 in die tiefere Position zu gelangen. Hierdurch ist ein erhöhter Kraftaufwand seitens des Benutzers erforderlich. Zudem ist im Bereich jeder Schaltposition innerhalb, beziehungsweise an der Laufbahn 17 eine der Kugelform entsprechende Senke 21 angeordnet, die eine Art Raste für die Kugel 18 bildet. Somit sinkt die Kugel 18 beim Erreichen der Schaltposition jeweils in die Senke 21 ein, wodurch eine sowohl mechanische als auch akustische Rückmeldung durch den Handhebel 9 an den Benutzer erfolgt. Auch ist der erforderliche Kraftaufwand beim Weiterverstellen aus einer Senke 21 heraus größer, sodass der Benutzer merkt, wenn er die erste Schaltposition in Richtung der weiteren Schaltposition verlässt.

Die Erfindung ist nicht auf das Ausführungsbeispiel beschränkt, sondern im Rahmen der Offenbarung vielfach variabel.

Alle in der Beschreibung und/oder Zeichnung offenbarten Einzel- und Kombinationsmerkmale werden als erfindungswesentlich angesehen.

### Bezugszeichenliste

- 1): Handhebelschalter
- 2): Gehäuse
- 3): Schalter
- 4): Schalter
- 5): Schalter
- 6): Schalter
- 7): Schaltkontakte
- 8): Schaltkontakte
- 9): Handhebel
- 10): Kabel
- 11): Schaltelement
- 12): Schaltkontakte
- 13): Schaltkontakte
- 14): Schaltnocken
- 15): Vorsprung an 11
- 16): Federn
- 17): Laufbahn an 11
- 18): Kugel
- 19): Schraubenfeder
- 20): weitere Kugel
- 21): Senke

## Patentansprüche

1. Hebelhandschalter (1) zur Steuerung der elektromotorischen Verstellung eines Sitzoder Liegemöbels, insbesondere eines Relax-Sessels, beispielsweise aus einer Grundstellung in eine Komfortstellung und zurück in die Grundstellung, wobei der Hebelhandschalter (1) ein Gehäuse (2) aufweist, in dem verschiedene Schalter mit Schaltkontakten zur Betätigung der elektrischen Antriebe des Sitz- oder Liegemöbels angeordnet sind, die mittels eines aus dem Gehäuse (2) herausragenden Handhebels (9) durch Bewegen des Handhebels (9) in Vorwärtsrichtung oder in Rückwärtsrichtung schaltbar sind und das Sitz- oder Liegemöbel aus der Grundstellung in die Komfortstellung oder zurück in die Grundstellung verstellen, wobei der Hebelhandschalter (1) mittels eines stromführenden Kabels (10) mit den elektrischen Antrieben und / oder einer Stromquelle verbunden oder verbindbar ist, **dadurch gekennzeichnet, dass** in jeder Betätigungsrichtung des Handhebels (9) mindestens zwei aufeinander folgende Schalter (3, 4 beziehungsweise 5, 6) mit Schaltkontakt (7,8 beziehungsweise 12, 13) im Gehäuse (2) angeordnet sind, die jeweils einen elektrischen Antrieb steuern.

2. Hebelhandschalter (1) nach Anspruch 1, **dadurch gekennzeichnet, dass** das Gehäuse (2) eine flache Quaderform aufweist, wobei der Handhebel (9) etwa mittig über den Verlauf der Länge aus einer der flachen Längsseiten herausragt und mit einem innerhalb des Gehäuses (2) drehbar angeordneten Schaltelement (11) verbunden ist, welches sowohl bei einer Vorwärtsbewegung als auch bei einer Rückwärtsbewegung des Handhebels (9) zuerst einen Schaltkontakt (7 oder 8) eines ersten Schalters (3 oder 5) im Gehäuse (2) betätigt und bei einer weiteren Bewegung in dieselbe Richtung einen Schaltkontakt (8 oder 13) eines weiteren Schalters (4 oder 6) betätigt, wobei das Schaltelement (11) über den Verlauf der Länge des Gehäuses (2) etwa mittig zwischen zwei Schalterpaaren (3, 4 beziehungsweise 5, 6) angeordnet ist, und das Schaltelement (11) in Richtung der Schalter (3, 4, 5, 6) abragende Schaltnocken (14) aufweist, die in der Nichtbetätigungslage nahe an den Schaltkontakten (7, 8, 12, 13) der Schalter (3, 4, 5, 6) angeordnet sind und die in einer ersten Betätigungslage einen Schaltkontakt (7 beziehungsweise 12) eines ersten Schalters (3 beziehungsweise 5) und in der weiteren Betätigungslage in derselben Richtung einen Schaltkontakt (8 beziehungsweise 13) eines weiteren Schalters (4 beziehungsweise 6) schalten.

3. Hebelhandschalter (1) nach Anspruch 2, **dadurch gekennzeichnet, dass** in der ersten Betätigungslage ein Schaltnocken (14) des Schaltelements (11) einen Schaltkontakt (7 beziehungsweise 12) des der Betätigungsrichtung abgewandten Schalterpaares (3, 4 beziehungsweise 5, 6) und in der weiteren Betätigungslage in derselben Richtung ein weiterer Schaltnocken (14) des Schaltelements (11) einen Schaltkontakt (8 beziehungsweise 13) des der Betätigungsrichtung zugewandten Schalterpaares (3, 4 beziehungsweise 5, 6) schaltet.

4. Hebelhandschalter (1) nach einem der Ansprüche 2 oder 3, **dadurch gekennzeichnet, dass** bei einer Verdrehung des Schaltelementes um 5° gegenüber der Nichtbetätigungslage in jede Richtung ein erster Schaltnocken (14) einen ersten Schaltkontakt (7 beziehungsweise 12) schaltet und bei einer Verdrehung um 11° gegenüber der Nichtbetätigungslage ein weiterer Schaltnocken (14) einen weiteren Schaltkontakt (8 beziehungsweise 13) schaltet.

5. Hebelhandschalter (1) nach einem der Ansprüche 2 bis 4, **dadurch gekennzeichnet, dass** der Handhebel (9) in der Nichtbetätigungslage gegen die Kraft einer Feder gehalten ist.

6. Hebelhandschalter (1) nach Anspruch 5, **dadurch gekennzeichnet, dass** am Schaltelement (11) an der dem Handhebel (9) entgegen gesetzten Seite ein Vorsprung (15) ausgebildet ist, der im Gehäuse (2) zwischen zwei vorgespannten Federn (16) angeordnet ist.

7. Hebelhandschalter (1) nach einem der Ansprüche 1 bis 6, **dadurch gekennzeichnet, dass** der Kraftaufwand zur Betätigung des weiteren Schalters (4 beziehungsweise 6) durch den Handhebel (9) deutlich höher ist als der Kraftaufwand zur Betätigung des ersten Schalters (3 beziehungsweise 5).

8. Hebelhandschalter (1) nach Anspruch 7, **dadurch gekennzeichnet, dass** am Schaltelement (11) eine Laufbahn (17) mit einer in der Laufbahn (17) geführten ersten Kugel (18) ausgebildet ist, wobei die Kugel (18) zwischen Laufbahn (17) einerseits und dem ersten Ende einer Schraubenfeder (19) andererseits gehalten und in der Laufbahn (17) zwangsgeführt ist, wobei zwischen dem anderen Ende der Schraubenfeder (19) und einer Gehäusewand eine weitere Kugel (20) angeordnet und geführt ist, wobei ferner die Laufbahn (17) in dem Bereich zwischen den jeweils ersten Schaltpositionen jeder Betätigungsrichtung tiefer ausgebildet ist als in den Bereichen zwischen erster und weiterer Schaltposition und im Bereich jeder Schaltposition eine der Kugelform entsprechende Senke (21) angeordnet ist.
